# EUROPEAN PATENT APPLICATION

(11) **EP 1 821 566 A1**
(43) Date of publication of application: **22.08.2007**
(21) Application number: 07102834.4
(22) Date of filing: 21.02.2007
(51) Int. Cl.: H04Q 7/38, H04Q 7/32, H04Q 7/36

(54) **Apparatus and method for identification of locations within a cellular network subject to loss of roaming users to competing cellular networks**

(30) Priority: 21.02.2006 US 774677 P
(71) Applicant: Starhome GmbH, 8024 Zürich (CH)
(72) Inventor: Elkarat, Shany, 49350, Petach Tikva (IL); Ben-Yehuda, Itzhak, 43729, RaAnana (IL); Zohar, Nir, 75206, Rishon-LeZion (IL)
(74) Representative: Schmitz, Jean-Marie

(57) **Abstract**

Apparatus for identification of locations within a cellular network subject to loss of roaming users, comprises a monitoring unit (12) for monitoring International controlling signaling of the cellular network, a register (14) for registering cancel signals associated with roaming cellular telephones leaving the cellular network, and a query unit (16), for responding to the cancel signals by issuing a query to identify a current cell location of the cellular telephone. The cell locations indicated can then be aggregated to show where there are problems with leakage of roaming users.

## Description

### FIELD AND BACKGROUND OF THE INVENTION

The present invention relates to apparatus and a method for identification of locations within a cellular network subject to loss of roaming users to competing cellular networks.

One of the most profitable fields for cellular networks is that of the roaming user, the tourist or businessperson abroad who wishes to use his mobile telephone while away from his home network. Typically, as the roaming user arrives in a new country, his telephone scans the airwaves looking for suitable networks and logs on to the one with the strongest signal. During the course of the user's stay, if the signal weakens below a particular threshold then the telephone scans again for a new network. The more sophisticated user knows how to actively select his roaming network, but the feature is not advertised and most users are unaware of this capability.

All cellular operators look for roaming users. Many times when one thinks of ways to attract roaming users or ways to increase revenue from roaming one considers solutions such as price reduction, special happy hour campaigns, sophisticated network services and the like.

However the truth is that any but the most sophisticated users have their roaming network set automatically, and trying to attract customers as outlined above is of limited use. Rather it is the more trivial issues that gain or lose roaming traffic, for example: does one have the best RF coverage at ports and airports, are there coverage holes in major commercial or tourist areas which are causing telephones to rescan and find other networks, does one have enough capacity. The truth is that it may not often be clear where important commercial or tourist areas are and a place that is an important tourist site at the moment due to heavy promotion may not be so in a year's time.

It is noted that the signal threshold below which a roaming user starts to scan for new networks is often set higher than the no-signal threshold at which the telephone ceases to function, so that a full update and cancel handshake procedure can be followed. Thus, although the cellular provider may be well aware of the holes in his network as experienced by his home subscribers, namely that at which the phones cease to function, he may not necessarily be as aware of the holes being experienced by roaming subscribers, which are based on this higher threshold.

In the highly competitive roaming market every little edge counts. Operators are getting more and more aggressive to preserve and increase their revenue from roaming. Yet to date there is no system in place that explicitly looks at network holes from the point of view of roaming.

There is thus a widely recognized need for, and it would be highly advantageous to have, a way of identifying, understanding and preventing loss of roaming traffic.

### SUMMARY OF THE INVENTION

According to one aspect of the present invention there is provided apparatus for identification of locations within a cellular network subject to loss of roaming users, comprising
a monitoring unit configured for monitoring International controlling signaling of said cellular network,
a register associated with said monitoring unit and configured for registering cancel signals issued on behalf of roaming cellular telephones, and
a query unit, associated with said register and configured for responding to said cancel signals by issuing a query to identify a current cell location of respective cellular telephones issuing said cancel signal, thereby to obtain indication of cell locations prone to lose roaming users.

According to a second aspect of the present invention there is provided a method for identification of locations within a cellular network subject to loss of roaming users, comprising
monitoring International controlling signaling of said cellular network,
registering cancel signals issued on behalf of roaming cellular telephones within said cellular network, and
responding to said cancel signals by issuing a query to identify a current cell location of respective cellular telephones, thereby to obtain an indication of cells responsible for loss of roaming users.

Unless otherwise defined, all technical and scientific terms used herein have the same meaning as commonly understood by one of ordinary skill in the art to which this invention belongs. The materials, methods, and examples provided herein are illustrative only and not intended to be limiting.

Implementation of the method and system of the present invention involves performing or completing certain selected tasks or steps manually, automatically, or a combination thereof. Moreover, according to actual instrumentation and equipment of preferred embodiments of the method and system of the present invention, several selected steps could be implemented by hardware or by software on any operating system of any firmware or a combination thereof. For example, as hardware, selected steps of the invention could be implemented as a chip or a circuit. As software, selected steps of the invention could be implemented as a plurality of software instructions being executed by a computer using any suitable operating system. In any case, selected steps of the method and system of the invention could be described as being performed by a data processor, such as a computing platform for executing a plurality of instructions.

### BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in order to provide what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Fig. 1 is a simplified block diagram of apparatus for monitoring International signaling to determine where roaming users are being lost to other networks, according to a first preferred embodiment of the present invention;
Fig. 2 is a simplified block diagram of a cellular network where roaming users are managed using a global location register;
Fig. 3 is a simplified flow chart illustrating a procedure for monitoring international signaling to determine where roaming users are being lost to other networks, according to a preferred embodiment of the present invention.
Fig. 4 is another simplified flow chart showing the procedure of Fig 3 with the optional addition of identifying the visitor location register (VLR) and querying the same.
Figs. 5A and 5B are together a flow chart illustrating a procedure according to a preferred embodiment of the present invention using an SRM module, according to a preferred embodiment of the present invention.
Fig. 6 is a simplified diagram showing the procedure of Figs. 5A and 5B over a diagrammatic illustration of the networks involved.
Fig. 7 is a simplified diagram illustrating an embodiment of the present invention based on a passive probe.

### DESCRIPTION OF THE PREFERRED EMBODIMENTS

The present embodiments comprise an apparatus and a method for understanding how roaming traffic is being lost to other networks with a view to improving infrastructure to prevent such loss from occurring. The idea is that a mobile telephone is set to look for a new network when a signal from an existing network is too weak. The telephone scans for a new network and then attempts to register thereto using a location update message. The telephone's home network receives the location update message and sends a cancel message to the existing network. The cancel message can be identified and then the current cell in which the mobile telephone is located can be recovered by following up the cancel message with a query. A cell that frequently appears as being responsible for loss of roaming users can then be investigated.

The cancel message does not necessarily indicate that the corresponding user has transferred to a different network in the same country. It may indicate that the user has moved to a different VLR within the same network, but this possibility may be excluded by looking for other location update messages from the same telephone within the same network. Alternatively the cancel message may indicate that the corresponding user has moved to a network in a different country. Such a possibility can be excluded by requesting location information from the HLR, or routing information. If the location information indicates another network in the same country, then it is clear that roaming leakage has occurred and the identified cell can be marked as the source of the loss.

The present embodiments thus bring valuable information about precise network holes without the need for implementation of any kind of positioning query to the telephone itself, although such a positioning query is featured in one of the present embodiments. Such positioning may be applied in addition when trying to find out later on what the exact problem with the cell is. There may for example be a shadow behind a tall building on one side of the cell antenna which turns out to be the cause of the losses.

In the present embodiments there is no need to track every cell in the network but only the ones that are in areas considered as popular tourist zones or important commercial centers. The monitoring system may look at every cancel message and then allow the user to filter down the final data to the most common identified cells. Alternatively the monitoring system can be preset to look only at specific predetermined cells, for example those cells associated with predetermined VLRs.

The principles and operation of an apparatus and method according to the present invention may be better understood with reference to the drawings and accompanying description.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

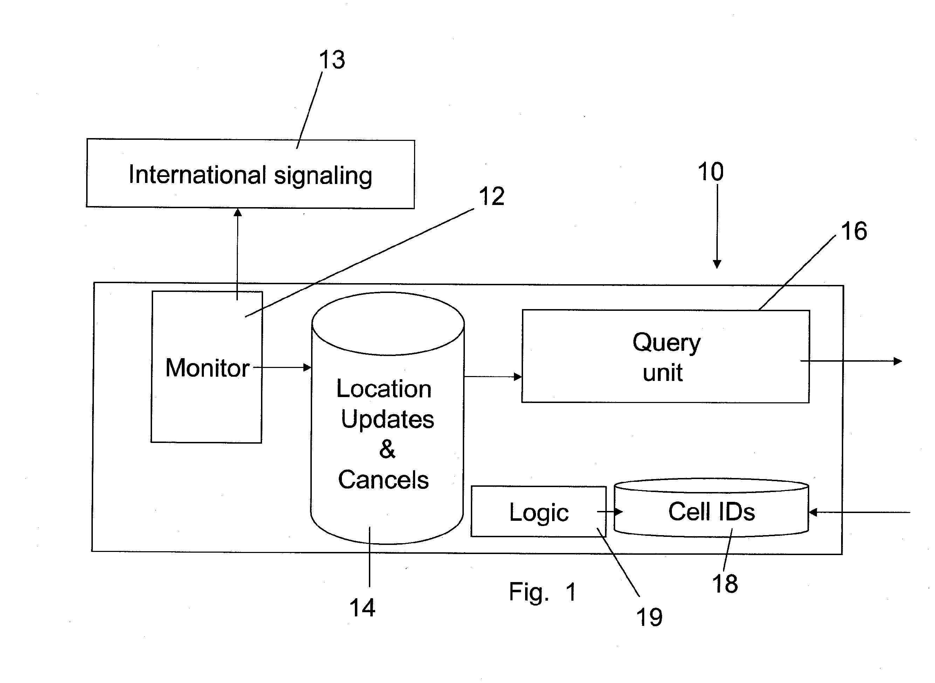

Reference is now made to Fig. 1 which illustrates apparatus 10 for identification of locations within a cellular network subject to loss of roaming users. The apparatus comprises a monitoring unit 12 which monitors International controlling signaling 13 emanating from the cellular network. As will be explained in greater detail below, in some embodiments the control signaling is monitored from the International links themselves. In other embodiments, particularly that of the global location register discussed below, the signaling is monitored from within the cellular network. Again, the monitoring unit may be either passive, namely a probe, or active, namely a relay, as will be explained in greater detail below.

A register 14 is connected to the monitoring unit for registering cancel signals issued on behalf of roaming cellular telephones by their home networks, when the cellular telephone requires to leave the cellular network. In brief, a cellular telephone which experiences too low a signal and therefore finds another network has to cancel its registration to the current network. It finds the new network and issues a location update (LU) message. The home network, and specifically the HLR, receives the LU and issues a cancel message to the previous HLR. It is this cancel message which is looked for as an indication of a roaming user leaving the system, and the register obtains any such cancel signal.

Once such a cancel signal is obtained, the system wishes to identify the location which triggered the cancel signal. Possibly there is a weak spot in the network which is giving away roaming users to other networks. Thus there is further provided a query unit 16 which uses the data in the register to respond to the cancel signals and issue a query to identify the current cell location of the telephone that has caused the cancel signal. The query unit may typically be provided as part of a roaming gateway which the visited cellular network uses to control incoming roaming users.

In one embodiment the monitor 12 is implemented by a signaling relay, and has consistently been following location update requests of the mobile telephones. The locations of the mobile phone in terms of which visitor location register (VLR) it is currently located at, are reported to the telephone's home location register (HLR) at its home network, so that the HLR can direct incoming callers to the telephone. These location update messages can be monitored so that the current VLR is known to apparatus 10. The query can then be directed by apparatus 10 to the known VLR. It is noted that the VLR is not the same as the cell location. Rather, a single VLR serves a number of cells, but the VLR knows the current cell location and thus provides the cell information in reply to the query. The reported cell ID is then recorded in database 18.

The query used is the MAP PSI (provide subscriber information) query, which goes to the network in general. In order to obtain the cell information the PSI is directed to the current VLR.

In an alternative embodiment, query unit 16 does not have the VLR information available. In this case, the query is directed to the HLR. The HLR finds the currently serving VLR and the VLR reports the cell identification as before. The query used is an MAP ATI (any time interrogation) query.

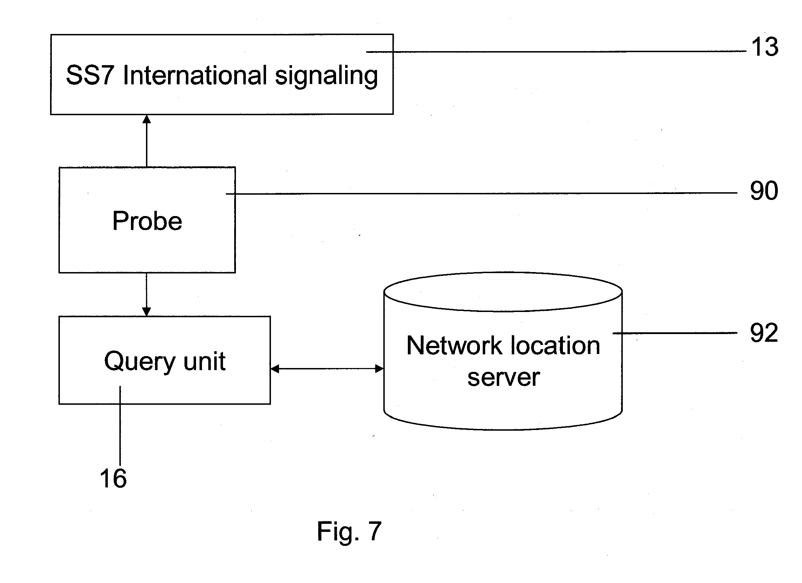

In an alternative embodiment, query unit 16 queries a network location server, for getting the cell ID for the specific subscriber. The location server may either provide the cell ID, or it may provide a more accurate location, such as the GPS or Galileo locations. Thus the query unit takes advantage of the fact that more and more cellular devices are being equipped with GPS, Galileo and like location systems. In this case, provided that the customer has enabled his permissions to allow it, the query can be forwarded to obtain the absolute location of the telephone. This gives more valuable information about the weak location because any given cell has locations within its range where reception is stronger or weaker. Thus there may be a particular weakness say in the shadow of a large building. The absolute location may allow such a signal shadow to be identified. The location server may be used equally well with a probe as the monitoring unit or with a relay. The use of a location server with a probe is shown in Fig. 7 below.

As mentioned above, the monitoring unit 12 is, according to one embodiment a probe. Typically the probe is an SS7 probe, which monitors the SS7 International telephony signaling links. The probe is a passive device, meaning it is a read only device, which merely notes the passing signaling. An SS7 probe is able to obtain location update messages (LU) and the cancel signals. The probe is able to work with the location server outlined above, and the embodiment is illustrated in Fig. 7 below.

In an alternative embodiment the monitoring unit 12 is implemented by a signaling relay. The relay actively relays the signaling and notes whatever needs to be noted. The relay is able to extract and buffer the cancel signals to allow time for the query unit to find out the current cell identity before the cancellation takes affect and the current VLR identity is deleted. By contrast, use of a probe does not delay the cancel signal. As a result, by the time the query has arrived at the VLR, the identity record may have been deleted. An SRM (signaling relay module) may carry out the relay functions and at the same time monitor the signals it is relaying. It further knows how to delay particular signals. Specifically the SRM may be programmed to detect the cancel signal. The SRM may also be programmed to send a PSI signal in response, and it therefore additionally fulfils the function of the query module 18. The SRM may be included within a roaming gateway or may be a standalone device.

If the cellular operator has IPN (Intelligent Preferred network) functionality in place, that is the ability to select preferred networks for his roaming users, or IRM (inbound roaming management), through which he provides managed services for inbound roamers who are roaming in his network, then their existing equipment may already have a relay already in use. Thus the present embodiments can be achieved simply by providing additional programming to their existing equipment.

In one version the incidents of roaming user loss are reported by the system in their entirety so that cell ID database 18 contains a number of incidents for each cell ID in the network. In such a case Cell ID database 18 preferably includes or is connected to a logic unit 19 which processes the identified cell locations of the individual loss of roaming user incidents. The end user is unlikely to be interested in a complete list of incidents but may be interested in a list of those cells where roaming leakage is prevalent. Thus the logic unit 19 may report those cells which are most commonly indicated.

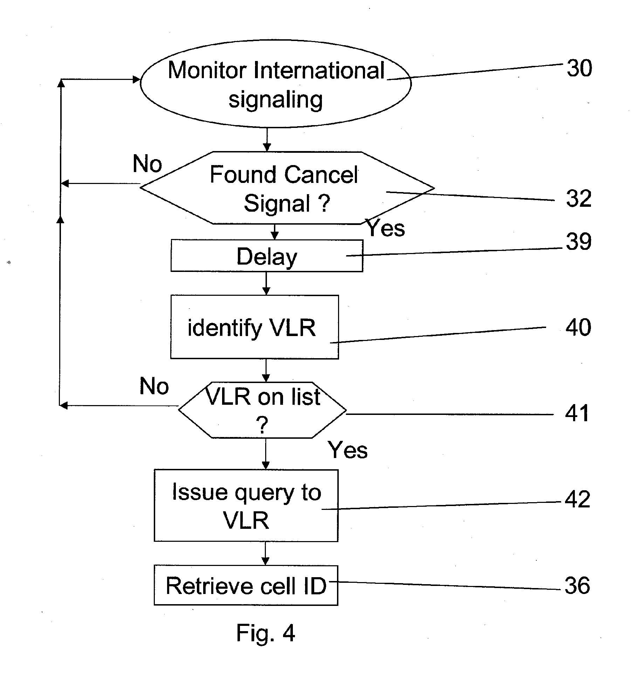

In an alternative embodiment, as explained below with reference to Fig. 4, the cell identification data is only obtained in the first place for those VLRs which are listed as being of interest. In this case logic unit 19 may be dispensed with.

In the embodiment in which logic unit 19 actively sorts the data, one way of sorting the data may be according to a threshold, say all cells that are responsible for more than a certain percentage of incidents. Thus only cells whose cancellations exceed this threshold are reported. Alternatively the system may look for the top reported cells until a certain proportion of incidents are covered. The proportion may be for example fifty percent. Thus the cells are listed in order of the number of reported incidents and then the list is reported from the top downwards until the cumulative total of incidents is fifty percent.

Alternatively the system may predefine certain most common commercial or tourist regions and only report the most common incidents in cells within the defined region. Reporting of the most common indicated cells in the defined region may be in either of the ways defined before, that is any cell exceeding a certain threshold, or starting from the most indicated cells downwards until a certain proportion of incidents, say 50%, is covered.

In the former case the list makes apparent where the most important commercial or tourist areas are, and can deal with unexpected changes such as a particular tourist area becoming suddenly popular due to a heavy promotion campaign in a foreign country. The latter case assumes stability in the commercial and tourist regions.

The cellular operator may then make use of the information as needed. He can see which cells have weak spots. He may even be able to see information as to where the weak spots are within the cells but the chances are he will have to go and physically identify the weak spots. However at least he now knows which cells to investigate. Having found a weak spot he now has the option of boosting the signal at that point, possibly by setting up a new cell or a repeater, or setting up a hot spot, or if possible increasing the signal strength at the cell antenna.

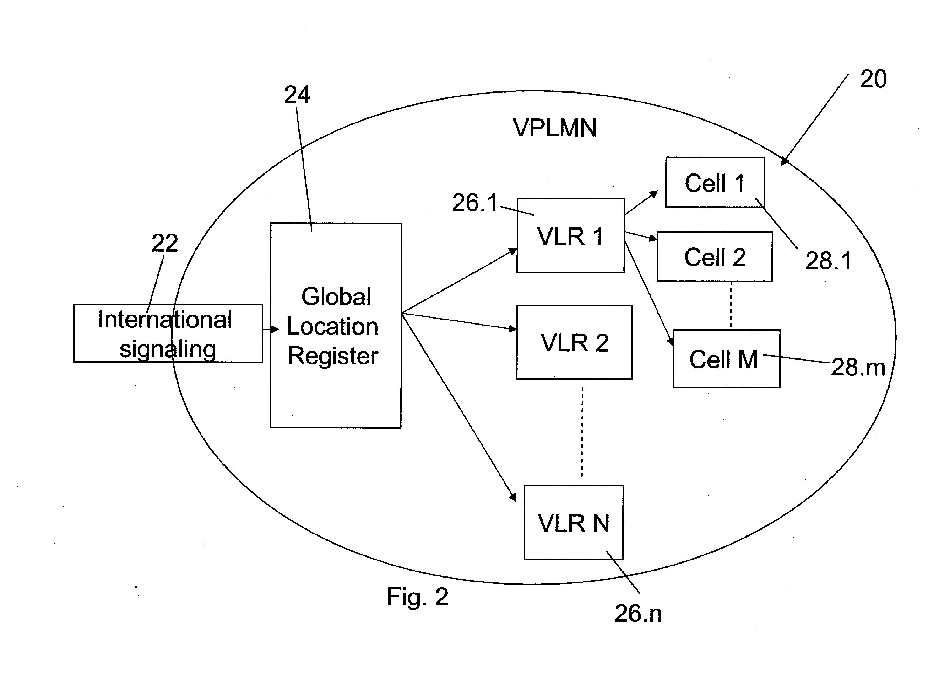

Reference is now made to Fig. 2, which is a simplified block diagram showing an arrangement of the visited cellular network for management of roaming cellular devices. VPLMN 20 exchanges control signals for roaming devices with their respective home networks via International signaling links, typically SS7 International signaling link 22. The International signaling arrives at global location register 24 which is presented to the home network as the single VLR all the time that the roaming device is in visited cellular network 20. Thus location update messages do not need to be sent to the home network every time the roaming cellular device changes its VLR. Rather the global location register keeps track of the roaming user's actual current VLR 26.1... 26.n and receives and forwards signaling as necessary. The VLRs 26.1...26.n keep track of the individual cells 28.1...28.m as before.

In the arrangement of Fig. 2, the system of Fig. 1 for tracking the cells responsible for roaming leakage works exactly as before, with the exception that instead of the monitoring unit 12 looking directly at the International signaling links, the international signaling is monitored at global location register 24which itself serves as the relay. This is because the identity of the actual VLR does not appear on the International signaling links. The cancel signal itself arrives at the global location register where it can be monitored before being forwarded to the actual VLR, the identity of the actual VLR not being known to the home network which sent the cancel message.

Typically the global location register includes a signal relay module (SRM) which carries out monitoring of the International signaling.

In one embodiment the roaming leakage detection system is embedded within the global location register to form an extended global location register. Thus the GLR incorporates the monitor, typically a relay, and the register and also includes the query unit.

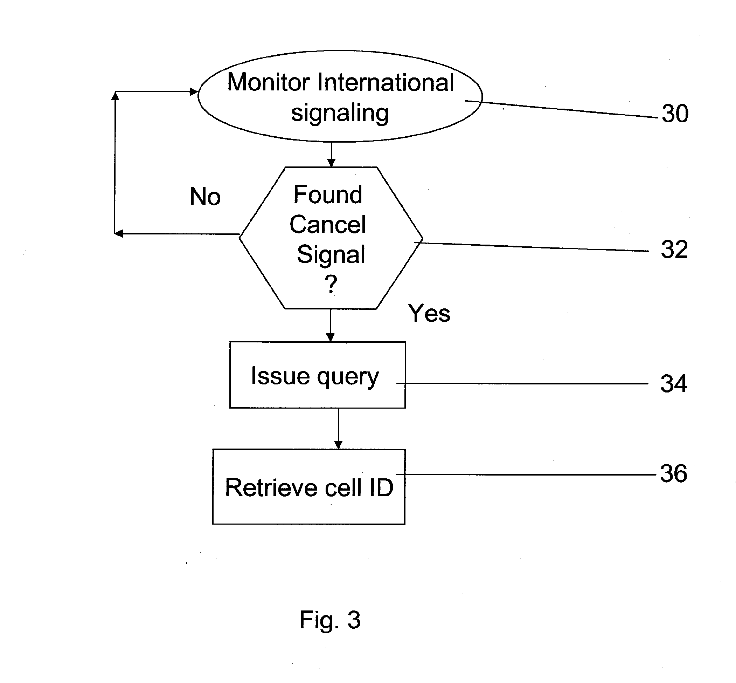

Reference is now made to Fig. 3, which is a simplified flow diagram showing a method for identification of locations within a cellular network subject to loss of roaming users. The method is suitable for use with the apparatus of Fig. 1 The method comprises monitoring 30 the International controlling signaling of the cellular network. When a cancel signal is found and registered 32, then a query is issued 34 to find out the identity of the current cell from which the cellular telephone issued the cancel signal. The cell ID is retrieved 36 and the retrieved data is then reported as required.

Reference is now made to Fig. 4 which is the same as Fig. 3 except that it adds the stage 39 of delaying the cancel signal and stage 40 of identifying the current VLR of the cellular device that has issued the cancel signal. In stage 41 the VLR retrieved is checked against a list of VLRs of interest. That is only certain VLRs are of interest, namely those in the main tourist or commercial regions. Any cancellation that relates to unlisted VLRs is simply ignored and the system continues monitoring. If the VLR is on the list then a query is created and issued to the current VLR in stage 42. The rest of the procedure is as in Fig. 3 and the remaining stages are given the same reference numerals and are not described again.

As discussed above, of the monitor preferably comprises an SRM (signaling relay module). The SRM component may be standalone or may be part of intelligent preferred network systems or global location register systems.

The relay module is able to delay the cancel signal, stage 39, until the query has been completed. Without such a delay the current cell identity may be deleted at the VLR before the query arrives. The SRM thus relays the international MAP link traffic and intervenes therewith according to its internal logic which is programmed according to the present embodiments. The operator is thus required to route all UL, ISD, and cancel messages to the point at which the relay is located.

Delaying the cancel message enables the apparatus 10 to query the last known VLR and get the cell id before it is canceled.

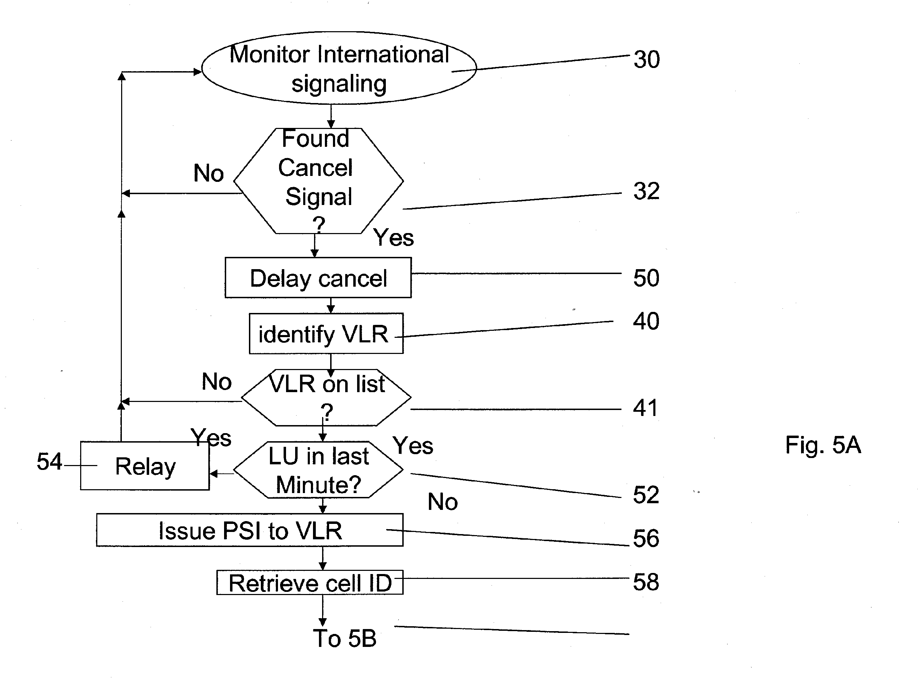

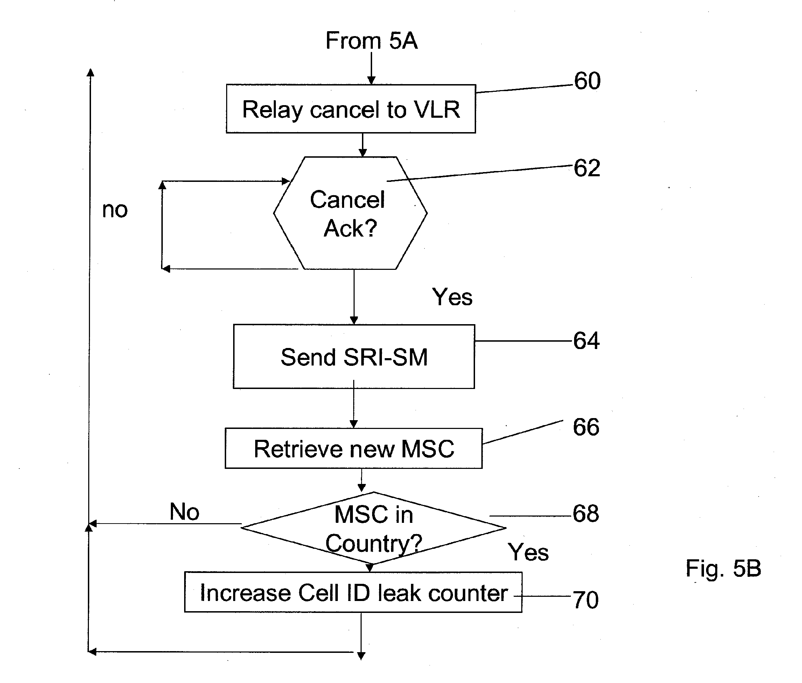

Reference is now made to Figs. 5A and 5B, which between them form a flow chart of operation of an embodiment of the present invention based on an SRM relay module. Stages that are the same as in previous figures are given the same reference numerals.

Initially the relay monitors the passing International signaling and records LUs. The monitor also looks for cancel signals. As soon as it has found a cancel signal the SRM delays the cancel signal in stage 50 while identifying the VLR at which the telephone is currently located in stage 40. The VLR is retrieved and in stage 41 is tested to see if it is on the list of VLRs of interest. If not then the cancel message is discarded and the system returns to stage 30.

If the VLR is on the list then the SRM enters stage 52 where it checks whether a location update was issued for the given telephone within a brief time duration, for example over the past minute. If there was such a location update message then the telephone in question has merely moved from one VLR to another within the same network and the cancel and LU messages are relayed as necessary in stage 54. If there was no LU message within the predetermined time then in stage 56 a PSI request is issued to the VLR that has been identified. In response the cell ID is retrieved in stage 58.

Following retrieval of the cell ID, stage 60 occurs in which the delayed cancel message is relayed to the VLR. Had the cancel message been relayed earlier the cell ID would have been deleted immediately along with the visitor record from the VLR and thus would not have been retrieved by the query.

At this point the system knows that the roaming user has been canceled from one VLR. He has not moved to another VLR within the same network, but we do not know if he has moved to another network within the country or he has moved out of the country. If he has moved out of the country, say he has crossed a border, then the current incident would not be one of roaming leakage.

In order to check that the user has in fact moved to another network within the country rather than left the country the SRM issues for example an SRI-SM message, which is a request for short message routing information. Such a message is typically used for sending SMS, so that it can be correctly routed to its destination. The result of the query is the location of the roaming user's new mobile switching center (MSC). If the new MSC is in the country but not in the current network then the current incident clearly is a case of roaming leakage and the leakage counter for the current cell ID as determined in stage 58 may be incremented. If the new MSC is either in the same network or out of the country then nothing is done, the information is discarded and the system continues monitoring.

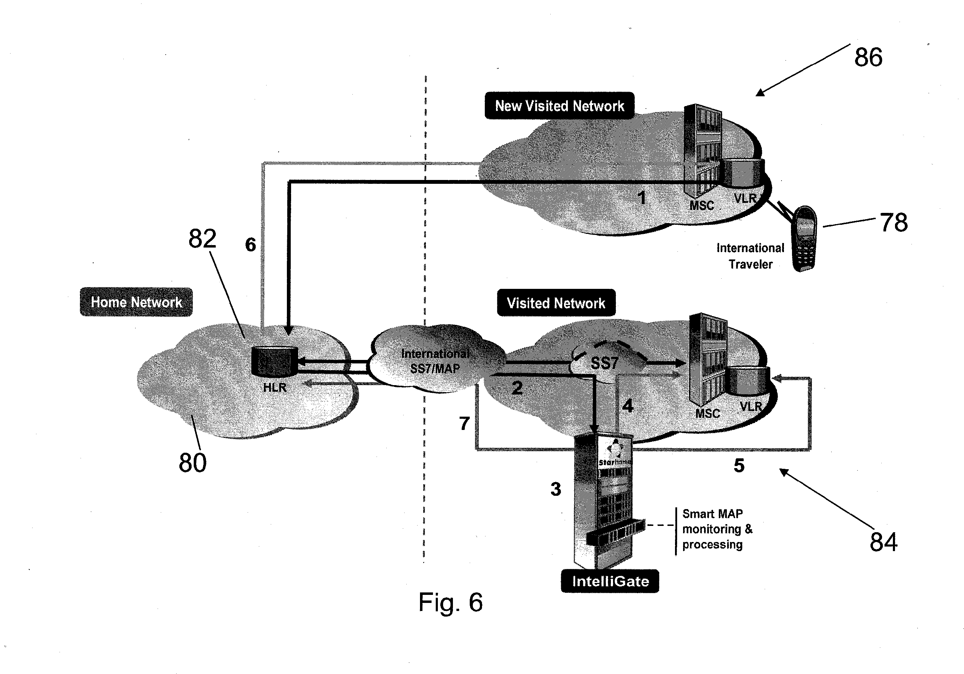

Reference is now made to Fig. 6 which shows the same flow as in Fig. 5 against the backdrop of a diagram of the various networks involved. A roaming user 78 is based at home network 80, where he is registered at HLR 82, and is initially roaming in visited network 84. Upon experiencing a weak spot in network 84, the telephone performs a scan and finds a stronger signal from new visited network 86. The procedure that is followed is outlined in Table 1.

**Table 1, procedure according to Fig. 5 Using SRM Relay. Stage numbers refer to Fig. 6.**

| **Stage** | **Description** |
|---|---|
| **1** | A visitor tries to register within a different VPMN in the country and generates an LU (Location Update) message |
| **2** | The HLR initiates a cancel Message to the previous VLR. |
| **3** | The Message arrives at the roaming gateway, which delays the cancel |
| **4** | The roaming gateway sends an ATI OR PSI to retrieve the cell id |
| **5** | The Roaming gateway relays the cancel message and the VLR sends the ACK |
| **6** | The HLR sends the ISD |
| **7** | The roaming gateway sends an SRI_SM in order to retrieve the new MSC / VLR |

Reference is now made to Fig. 7, in which a probe 90 forms the monitoring unit for monitoring the International signaling links 13 in order to detect cancel signals. The probe is unable to delay the cancel signals, which therefore take effect immediately. Instead the probe issues a query via query unit 16 to network location server 92. Network location server keeps track of locations of telephones across the network. The locations it stores may include those taken from GPS or Galileo satellite-based positioning.

It is expected that during the life of this patent many relevant devices and systems will be developed and the scope of the terms herein, particularly of the terms GSM, International Signaling, International controlling signaling, SS7, HLR, VLR, Cell, is intended to include all such new technologies *a priori.*

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims. All publications, patents, and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention.

## Claims

1. Apparatus for identification of locations within a cellular network subject to loss of roaming users, comprising
a monitoring unit configured for monitoring International controlling signaling of said cellular network,
a register associated with said monitoring unit and configured for registering cancel signals issued on behalf of roaming cellular telephones, and
a query unit, associated with said register and configured for responding to said cancel signals by issuing a query to identify a current cell location of respective cellular telephones issuing said cancel signal, thereby to obtain indication of cell locations prone to lose roaming users.

2. Apparatus according to claim 1, wherein said monitoring unit is a probe.

3. Apparatus according to claim 1, wherein said monitoring unit is a relay.

4. Apparatus according to claim 3, wherein said relay is configured to delay passing on of said cancel signal to allow time to obtain said current cell location.

5. Apparatus according to claim 3, wherein said relay is further configured to monitor location update requests of said international controlling signaling and wherein said register is configured to use said requests to keep track of visitor location registers currently in use by respective cellular telephones.

6. Apparatus according to claim 5, wherein said query unit is configured to issue said query to a respective visitor location register of said cellular telephones associated with a cancel signal.

7. Apparatus according to claim 3, wherein said query unit is configured to issue said query to a respective home location register of said respective cellular telephones associated with cancel signals.

8. Apparatus according to claim 5, further configured to check whether a respective VLR currently in use is on a list of VLRs of interest.

9. Apparatus according to claim 8, further configured to find subsequent location update requests issued by said roaming user within said cellular network, therefrom to determine that said cancel signal does not indicate loss of a roaming user.

10. Apparatus according to claim 5, further configured to issue a request for call routing data, thereby to confirm that a respective roaming subscriber has moved to another network within the same country.

11. Apparatus according to any preceding claim, wherein a global location register is used at said cellular network to manage at least roaming cellular telephones, such that international controlling signaling passes through said global location register, and said monitoring unit carries out monitoring of said international control signaling at said global location register.

12. Apparatus according to any one of claims 1 to 10, wherein a global location register is used at said cellular network to manage at least roaming cellular telephones, such that international controlling signaling passes through said global location register, said apparatus being incorporated within said global location register.

13. Apparatus according to any preceding claim, further comprising a logic unit for processing identified cell locations to indicate those cells where roaming leakage is prevalent.

14. Apparatus according to claim 13, wherein said logic unit is configured to output the most commonly indicated cells.

15. Apparatus according to claim 13, wherein said logic unit is configured to output the most commonly indicated cells amongst a predetermined group of cells.

16. Apparatus according to any preceding claim, wherein said query is directed to a network location server, to obtain therefrom a last known location of an indicated telephone.

17. Apparatus according to claim 16, wherein said last known location is one member of the group consisting of a cell identification and a satellite-based location indication.

18. Apparatus according to claim 16, wherein said monitoring unit is a relay.

19. Apparatus according to claim 16, wherein said monitoring unit is a probe.

20. A method for identification of locations within a cellular network subject to loss of roaming users, comprising
monitoring International controlling signaling of said cellular network,
registering cancel signals issued on behalf of roaming cellular telephones within said cellular network, and
responding to said cancel signals by issuing a query to identify a current cell location of respective cellular telephones, thereby to obtain an indication of cells responsible for loss of roaming users.

21. Method according to claim 20, wherein said monitoring comprises passing said signaling through a relay and wherein said relaying comprises delaying passing on of said cancel signal to allow time to obtain said current cell location.

22. Method according to claim 20, further comprising monitoring location update requests of said international controlling signaling and using said requests to keep track of visitor location registers currently in use by respective cellular telephones.

23. Method according to claim 20, further comprising issuing said query to a respective tracked visitor location register of said cellular telephones associated with respective cancel signals.

24. Method according to claim 20, comprising issuing said query to a respective home location register of said respective cellular telephones associated with said cancel signals.

25. Method according to claim 22, further comprising checking whether a respective VLR currently in use is on a list of VLRs of interest.

26. Method according to claim 25, further comprising finding subsequent location update requests issued by said roaming user within said cellular network, therefrom to determine that said cancel signal does not indicate loss of a roaming user.

27. Method according to claim 22, further comprising issuing a request for routing data, thereby to confirm that a respective roaming subscriber has moved to another network within the same country.

28. Method according to any one of claims 20 to 27, wherein a global location register is used at said cellular network to manage at least roaming cellular telephones, such that international controlling signaling passes through said global location register, and said monitoring, said registering and said responding are comprised within said global location register.

29. Method according to any one of claims 20 to 28, further comprising processing identified cell locations to indicate those cells where roaming leakage is prevalent.

30. Method according to claim 29, further comprising outputting the most commonly indicated cells.

31. Method according to claim 29 comprising outputting the most commonly indicated cells amongst a predetermined group of cells.

32. Method according to any one of claims 20 to 28, comprising directing said query to a network location server, to obtain therefrom a last known location of an indicated telephone.

33. Method according to claim 32, wherein said last known location is one member of the group consisting of a cell identification and a satellite-based location indication.
